# EUROPÄISCHE PATENTSCHRIFT

(11) **EP 3 820 344 B1**
(45) Veröffentlichungstag und Bekanntmachung des Hinweises auf die Patenterteilung: **30.08.2023**
(21) Anmeldenummer: 19735544.9
(22) Anmeldetag: 01.07.2019
(51) Int. Cl.: A47L 13/58

(54) **EIMER UND REINIGUNGSSYSTEM, DAS EINEN SOLCHEN EIMER UMFASST**
BUCKET AND CLEANING SYSTEM COMPRISING SUCH A BUCKET
SEAU ET SYSTEME DE NETTOYAGE COMPRENANT UN TEL SEAU

(30) Priorität: 11.07.2018 DE 102018116774
(43) Veröffentlichungstag der Anmeldung: 19.05.2021
(73) Patentinhaber: Carl Freudenberg KG, 69469 Weinheim (DE)
(72) Erfinder: DINGERT, Uwe, 69518 Abtsteinach (DE); WEIS, Norbert, Dr., 69469 Weinheim (DE)
(86) Internationale Anmeldenummer: PCT/EP2019/067553
(87) Internationale Veröffentlichungsnummer: WO 2020/011579

(56) Entgegenhaltungen:
- WO-A1-2014/180341
- DE-B3-102014 017 559

## Beschreibung

### Technisches Gebiet

Die Erfindung betrifft einen Eimer und ein Reinigungssystem, das einen solchen Eimer umfasst.

Der Eimer umfasst zumindest zwei Kammern, die durch zumindest einen Überströmkanal strömungsleitend miteinander verbunden sind, wobei eine der Kammern als für ein Reinigungsgerät kombinierte AuswaschlAusschleuderkammer und eine der Kammern als Wasserstands-Regulierungskammer zur Regulierung des Wasserstands in der Auswasch-/Ausschleuderkammer ausgebildet ist.

### Stand der Technik

Ein solcher Eimer und ein solches Reinigungssystem sind aus der WO 2014/180341 A1 bekannt.

Eine Entwässerungsvorrichtung für ein Feuchtreinigungsgerät ist aus der DE 10 2014 017 559 B3 bekannt. Die Entwässerungsvorrichtung umfasst eine Bewässerungsvorrichtung für das Feuchtreinigungsgerät und einen rotierbaren Entwässerungskorb für das Feuchtreinigungsgerät, wobei die Bewässerungsvorrichtung ein mit Frischwasser befüllbares Frischwasserreservoir umfasst, das durch eine Frischwasserleitung strömungsleitend mit dem Entwässerungskorb verbunden ist. Der Entwässerungskorb umfasst einen mit der Frischwasserleitung strömungsleitend verbundenen und in den Entwässerungskorb vorgewölbten Frischwasserdom, wobei die Frischwasserleitung eine in den Frischwasserdom mündende Ausströmöffnung aufweist, mit einer ersten Höhe, die höchstens so groß wie eine zweite Höhe des Anschlusses des Frischwasserreservoirs ist. Das Frischwasserreservoir und der Frischwasserdom sind einander nach Art von kommunizierenden Röhren zugeordnet. Durch die genannten Höhen ist sichergestellt, dass das Frischwasser aus dem Frischwasserreservoir praktisch vollständig genutzt wird, um das Feuchtreinigungsgerät zu befeuchten und/oder mit Frischwasser auszuspülen.

Unter "Wasser" wird in dieser Beschreibung eine Reinigungsflüssigkeit im weitesten Sinne verstanden.

Zum Beispiel Wasser mit einem Reinigungszusatz in flüssiger oder pulvriger Form oder auch eine synthetisch hergestellte Reinigungsflüssigkeit.

Eine Veränderung des Wasserstandes im Eimer kann vom Benutzer dadurch vorgenommen werden, dass er Wasser bedarfsweise auffüllt oder aus dem Eimer entleert.

Abhängig vom Grad der Verunreinigung der zuvor mit dem Reinigungsgerät gereinigten Fläche, ist auch das im Eimer befindliche Wasser entsprechend verunreinigt. Bei starker Verschmutzung der zu reinigenden Flächen und daraus resultierend des Reinigungsgeräts muss das Wasser im Eimer häufig gewechselt werden.

Soll das Reinigungsgerät, das neben dem Eimer einen Bestandteil des Reinigungssystems bildet, nicht nur ausgewaschen, sondern zusätzlich ausgeschleudert werden, kann das in einer separat ausgebildeten Ausschleuderkammer des Eimers erfolgen, zum Beispiel in einem in der Ausschleuderkammer angeordneten Ausschleuderkorb, der zusammen mit dem Reinigungsgerät durch einen Antrieb in eine Drehbewegung versetzbar ist. Ein solcher Eimer hat dann also zwei Kammern, die räumlich voneinander getrennt sind.

Dabei ist zu beachten, dass der Benutzer das Reinigungsgerät im Eimer immer wieder bedarfsweise von der Auswaschkammer in die Ausschleuderkammer des Eimers bewegen muss, wobei die Auswaschkammer stets mit Wasser befüllt, die Ausschleuderkammer hingegen stets im Wesentlichen trocken ist.

### Darstellung der Erfindung

Der Erfindung liegt die Aufgabe zu Grunde, einen Eimer und ein Reinigungssystem, das einen solchen Eimer umfasst, derart weiterzuentwickeln, dass die Handhabung von Eimer und Reinigungssystem ohne funktionale Nachteile für den Benutzer vereinfacht ist.

Diese Aufgabe wird erfindungsgemäß durch einen Eimer mit den Merkmalen von Anspruch 1 und ein Reinigungssystem mit den Merkmalen von Anspruch 24 gelöst. Auf vorteilhafte Ausgestaltungen des Eimers nehmen die auf Anspruch 1 direkt oder indirekt rückbezogenen Unteransprüche Bezug.

Zur Lösung der Aufgabe ist ein Eimer vorgesehen, umfassend zumindest zwei Kammern, die durch zumindest einen Überströmkanal strömungsleitend miteinander verbunden sind, wobei eine der Kammern als für ein Reinigungsgerät kombinierte Auswasch-/Ausschleuderkammer und eine der Kammern als Wasserstands-Regulierungskammer zur Regulierung des Wasserstands in der Auswasch-/Ausschleuderkammer ausgebildet ist, wobei in der Wasserstands-Regulierungskammer ein durch eine erste Betätigungsvorrichtung bewegbarer Verdrängerkörper angeordnet ist.

Die Kammern sind durch den Überströmkanal strömungsleitend miteinander verbunden.

Um ein Reinigungsgerät in insgesamt nur einer Kammer eines Eimers bedarfsweise entweder auswaschen oder ausschleudern zu können, ist es erforderlich, dass der Wasserstand in dieser Kammer bedarfsweise an den jeweiligen Auswasch- oder Ausschleudervorgang angepasst werden kann.

Soll das Reinigungsgerät nach Reinigung einer zu reinigenden Fläche zunächst ausgewaschen werden, ist es erforderlich, dass in der Kammer dafür ausreichend viel Wasser zur Verfügung steht; der Wasserstand muss für das Auswaschen des Reinigungsgeräts ausreichend hoch sein.

Soll das zuvor ausgewaschene Reinigungsgerät anschließend in derselben Kammer ausgeschleudert werden, ist es demgegenüber erforderlich, dass die Kammer dann im Wesentlichen frei von Wasser ist. Dazu muss der Wasserstand in der Kammer entsprechend abgesenkt werden.

Die Höhe des Wasserstands im Eimer wird mittels des durch die erste Betätigungsvorrichtung bewegbaren Verdrängerkörpers reguliert, wobei der Verdrängerkörper in der Wasserstands-Regulierungskammer angeordnet ist.

Zur Funktion wird Folgendes ausgeführt:
Soll das Reinigungsgerät zum Beispiel nach Reinigung einer zu reinigenden Fläche im Eimer ausgewaschen und anschließend ausgeschleudert werden, wird der Verdrängerkörper durch Betätigung der ersten Betätigungsvorrichtung in der Wasserstands-Regulierungskammer zumindest teilweise, bevorzugt vollständig abgesenkt, um das in der Wasserstands-Regulierungskammer befindliche Wasser durch den Überströmkanal in die kombinierte Auswasch-/ Ausschleuderkammer zu verdrängen. Die kombinierte Auswasch-/ Ausschleuderkammer ist dadurch mit Wasser ausreichend hoch befüllt, und das Reinigungsgerät kann darin ausgewaschen werden.

Nachdem das Reinigungsgerät ausgewaschen ist, wird der Verdrängerkörper aus der Wasserstands-Regulierungskammer zumindest teilweise, bevorzugt vollständig, herausbewegt, so dass das zuvor in der Auswasch-/ Ausschleuderkammer befindliche Wasser durch den Überströmkanal wieder in die Wasserstands-Regulierungskammer zurückströmt. Anschließend ist die kombinierte Auswasch-/ Ausschleuderkammer im Wesentlichen trocken, so dass das Reinigungsgerät in derselben Kammer, in der es zuvor ausgewaschen wurde, nun ausgeschleudert werden kann.

Das Ausschleudern kann durch eine geeignete Ausschleudervorrichtung erfolgen, beispielsweise durch einen in der Auswasch-/ Ausschleuderkammer angeordneten Ausschleuderkorb, in den das Reinigungsgerät eingesetzt und zusammen mit dem Ausschleuderkorb in eine Drehbewegung versetzt wird.

Das Reinigungsgerät kann zum Auswaschen und zum Ausschleudern in ein und derselben Kammer des Eimers verbleiben. Die Handhabung ist dadurch vereinfacht.

Die Auswasch-/ Ausschleuderkammer und die Wasserstands-Regulierungskammer sind, in einer Draufsicht auf den Eimer betrachtet, im Wesentlichen nebeneinander liegend angeordnet. Hierbei ist von Vorteil, dass der Eimer dadurch einen einfachen Aufbau aufweist und in fertigungstechnischer Hinsicht einfach und in wirtschaftlicher Hinsicht kostengünstig herstellbar ist.

Die Auswasch-/ Ausschleuderkammer und die Wasserstands-Regulierungskammer funktionieren durch den Überströmkanal, der sie strömungsleitend miteinander verbindet, nach Art von kommunizierenden Röhren.

Der Verdrängerkörper kann durch die erste Betätigungsvorrichtung innerhalb der Wasserstands-Regulierungskammer auf und ab bewegbar sein. Der Wasserstand im Eimer lässt sich dadurch einfach und genau an die jeweiligen Bedürfnisse des jeweiligen Anwendungsfalls anpassen.

Die Übertragung einer translatorischen Bewegungen der ersten Betätigungsvorrichtung auf eine translatorische Bewegung des Verdrängerkörpers kann konstruktiv einfach gelöst werden, zum Beispiel dadurch, dass die erste Betätigungsvorrichtung durch ein Fußpedal gebildet ist, das den Verdrängerkörper mittels eines Gestänges in die Auf- und Abbewegung versetzt.

Der Verdrängerkörper kann unterschiedlich ausgebildet sein.

Beispielsweise kann der Verdrängerkörper als Hohlkörper ausgebildet sein. Hierbei ist von Vorteil, dass der Verdrängerkörper selbst nur ein geringes Gewicht aufweist und in der Wasserstands-Regulierungskammer im abgesenkten Zustand einen großen Auftrieb. Ein solcher Verdrängerkörper kann ohne Betätigung der ersten Betätigungsvorrichtung selbsttätig dafür sorgen, dass der Verdrängerkörper bei nicht betätigter erster Betätigungsvorrichtung aufschwimmt. Dadurch wird Auswasch-/ Ausschleuderkammer bei nicht betätigter erster Betätigungsvorrichtung selbsttätig trockengelegt.

Der Verdrängerkörper kann glockenförmig ausgebildet sein. Hierbei ist von Vorteil, dass der Verdrängerkörper dadurch einfach und kostengünstig herstellbar ist.

Der Verdrängerkörper ist bevorzugt aus dem Eimer entnehmbar ausgeführt. Dadurch lässt sich der Eimer bedarfsweise einfach reinigen.

Der Verdrängerkörper kann aus einem polymeren Werkstoff bestehen. Verdrängerkörper aus einem solchen Werkstoff haben den Vorteil, dass sie gegen alle üblichen Reinigungsflüssigkeiten resistent und außerdem korrosionsbeständig sind.

Nach einer anderen Ausgestaltung kann der Verdrängerkörper ein veränderliches Verdrängervolumen aufweisen. Dazu kann es vorgesehen sein, dass das Verdrängervolumen strömungsleitend mit der Wasserstands-Regulierungskammer verbunden und durch Betätigung einer Evakuierungsvorrichtung volumenveränderlich ist.

In einer solchen Ausgestaltung ist die erste Betätigungsvorrichtung durch die Evakuierungsvorrichtung gebildet.

Ein Verdrängerkörper mit einem veränderlichen Verdrängervolumen kann beispielsweise bei im Wesentlichen trockener Auswasch-/ Ausschleuderkammer mit Wasser aus der Wasserstands-Regulierungskammer weitgehend gefüllt sein. Soll demgegenüber die Auswasch-/ Ausschleuderkammer mit Wasser aus der Wasserstands-Regulierungskammer gefüllt werden, wird das im Verdrängerkörper befindliche Wasser durch Betätigung der Evakuierungsvorrichtung aus dem Verdrängerkörper verdrängt und durch den Überströmkanal in die Auswasch-/ Ausschleuderkammer bewegt. Die Evakuierungsvorrichtung kann beispielsweise nach Art eines Blasebalgs funktionieren und durch Fußkraft betätigbar sein.

Gemäß einer vorteilhaften Ausgestaltung kann es vorgesehen sein, dass im Überströmkanal ein Flüssigkeitsfilter angeordnet ist.

Der Flüssigkeitsfilter ist bevorzugt in nur einer Strömungsrichtung, nämlich von der Wasserstands-Regulierungskammer zu der Auswasch-/ Ausschleuderkammer, durchströmbar.

Dazu kann der Flüssigkeitsfilter nach Art eines Rückschlagventils ausgebildet sein, derart, dass der Flüssigkeitsfilter entgegengesetzt zur Strömungsrichtung, nämlich von der Auswasch-/ Ausschleuderkammer zur Wasserstands-Regulierungskammer, umströmbar ist.

Die Anordnung eines Flüssigkeitsfilters im Überströmkanal zwischen der Auswasch-/ Ausschleuderkammer und der Wasserstands-Regulierungskammer ist in mehrerlei Hinsicht vorteilhaft, wie nachfolgend ausgeführt wird:
Wird das durch seine Benutzung verunreinigte Reinigungsgerät in der kombinierten Auswasch-/ Ausschleuderkammer zunächst ausgewaschen, gelangen Verunreinigungen aus dem Reinigungsgerät in das Wasser, das sich zum Auswaschen des Reinigungsgeräts in der Auswasch-/ Ausschleuderkammer befindet.

Zum anschließenden Ausschleudern des Reinigungsgeräts wird der Verdrängerkörper in der Wasserstands-Regulierungskammer aufwärts bewegt und das verunreinigte Wasser aus der Auswasch-/ Ausschleuderkammer strömt am Flüssigkeitsfilter ungefiltert vorbei in die Wassertands-Regulierungskammer.

Die Verunreinigungen befinden sich nach wie vor im verunreinigten Wasser und nun in der Wasserstands- Regulierungskammer, und die Auswasch-/ Ausschleuderkammer ist zum Ausschleudern des Reinigungsgeräts weitgehend trocken und frei von Verunreinigungen.

Soll das Reinigungsgerät nach einem weiteren Reinigungszyklus in der Auswasch-/ Ausschleuderkammer erneut ausgewaschen werden, wird der Verdrängerkörper mittels der ersten Betätigungsvorrichtung in die Wasserstands-Regulierungskammer abgesenkt, und das zunächst noch verunreinigte Wasser aus dieser Kammer wird durch den Flüssigkeitsfilter hindurch in die Auswasch-/ Ausschleuderkammer bewegt. Durch den Flüssigkeitsfilter werden die zuvor in der Wasserstands-Regulierungskammer befindlichen Verunreinigungen in dieser zurückgehalten. In die Auswasch-/ Ausschleuderkammer gelangt also nur durch den Flüssigkeitsfilter gefiltertes Wasser. Das Reinigungsgerät kann dadurch bedarfsweise häufig und wirkungsvoll mit weitgehend sauberem Wasser ausgewaschen werden.

Das Wasser im Eimer muss durch die Filterung des Wassers nur selten gewechselt werden.

Unter "im Überströmkanal" wird generell eine Anordnung des Flüssigkeitsfilters auf dem Strömungsweg zwischen Auswasch-/ Ausschleuderkammer und Wasserstands-Regulierungskammer verstanden. Für die Funktion des Flüssigkeitsfilters ist es praktisch unerheblich, ob dieser im Bereich der stirnseitigen Enden des Überströmkanals oder zwischen diesen stirnseitigen Enden angeordnet ist, erst recht dann, wenn der Überströmkanal nur sehr kurz, zum Beispiel in Form einer Blende ausgebildet ist, um den Eimer in seinen Abmessungen möglichst kompakt zu halten.

Der Flüssigkeitsfilter kann in einer im Überströmkanal schwenkbar angeordneten Klappe angeordnet sein.

Das schließt auch eine Ausgestaltung ein, bei der der Flüssigkeitsfilter selbst als schwenkbare Klappe ausgebildet ist.

Eine schwenkbare Klappe im Überströmkanal kann einfach und kostengünstig vorgesehen werden, wobei eine solche Klappe für den Benutzer des Eimers leicht zugänglich und bedarfsweise auswaschbar und/oder austauschbar ist. Zum Beispiel kann der Flüssigkeitsfilter nach einiger Gebrauchsdauer zunächst ausgewaschen werden, um die ursprünglich gute Filterwirkung wieder zu erreichen. Sollte diese Filterwirkung durch Reinigung des Flüssigkeitsfilters nicht mehr erreichbar sein, besteht für den Benutzter die Möglichkeit, den Flüssigkeitsfilter durch einfachen Austausch zu erneuern.

Nach einer ersten Ausgestaltung kann der Flüssigkeitsfilter durch die Strömungsverhältnisse im Überströmkanal selbsttätig bewegbar sein. Eine solche Betätigung des Flüssigkeitsfilters ist konstruktiv besonders einfach. Der Benutzer braucht sich um die Betätigung des Flüssigkeitsfilters nicht zu kümmern.

Nach einer anderen Ausgestaltung kann der Flüssigkeitsfilter durch eine zweite Betätigungsvorrichtung betätigbar sein. Die zweite Betätigungsvorrichtung wird vom Benutzer betätigt.

Um die Koordination von erster und zweiter Betätigungsvorrichtung für den Benutzer zu vereinfachen, können die erste und die zweite Betätigungsvorrichtung bevorzugt funktionstechnisch gekoppelt und dadurch gleichzeitig betätigbar sein. Durch die gemeinsame Betätigung der beiden Betätigungsvorrichtungen ergibt sich eine Zwangssteuerung für den Flüssigkeitsfilter, abhängig von der Auf- und Abbewegung des Verdrängerkörpers.

Eine Fehlbedienung, die zu einer Funktionsbeeinträchtigung der zuvor beschriebenen Abläufe führen könnte, ist dadurch praktisch ausgeschlossen.

Für eine gute Handhabung des Eimers und damit des Reinigungssystems, das einen solchen Eimer umfasst, ist es zweckmäßig, dass der Eimer möglichst kompakte Abmessungen aufweist und auch im mit Wasser befüllten Zustand ohne übermäßige Kraftanstrengung transportiert werden kann.

Aus diesem Grund sollte der Eimer ein Wasservolumen aufweisen, das zum Auswaschen des Reinigungsgeräts ausreichend, jedoch nicht wesentlich größer ist, um die Handhabung des Eimers nicht unnötig zu erschweren.

Um das zu erreichen, kann es gemäß einer vorteilhaften Ausgestaltung vorgesehen sein, dass die Auswasch-/ Ausschleuderkammer einen ersten Boden und die Wasserstands-Regulierungskammer einen zweiten Boden umfasst, dass die Böden im Eimer in unterschiedlichen Höhen angeordnet sind und dass der erste Boden oberhalb des zweiten Bodens angeordnet ist. Die Böden sind demnach, im Schnitt des Eimers betrachtet, stufenförmig versetzt zueinander angeordnet. Hierbei ist von Vorteil, dass durch die stufenförmige Anordnung das Wasservolumen im Eimer auf ein Minimum reduziert werden kann. Durch den relativ höher angeordneten ersten Boden der Auswasch-/ Ausschleuderkammer reicht ein vergleichsweise geringes Wasservolumen in der Wasserstands-Regulierungskammer aus, um, verdrängt durch den betätigten Verdrängerkörper, die Auswasch-/ Ausschleuderkammer ausreichend hoch zu befüllen und das Reinigungsgerät auswaschen zu können.

Der Eimer ist durch das geringe Wasservolumen auch in gebrauchsfertigem Zustand vergleichsweise leicht.

Der im Eimer höher angeordnete erste Boden hat außerdem den Vorteil, dass dadurch unterhalb dieses ersten Bodens innerhalb der Außenabmessungen des Eimers ein Einbauraum entsteht, wobei im Einbauraum bevorzugt zumindest die erste Betätigungsvorrichtung angeordnet ist.

Außerdem kann der Einbauraum zur Anordnung der zweiten Betätigungsvorrichtung genutzt werden oder zur Anordnung einer kombinierten Betätigungsvorrichtung, umfassend die erste und zweite Betätigungsvorrichtung.

In dem Einbauraum kann ein Fußpedal angeordnet sein, durch das der Verdrängerkörper und/oder der Flüssigkeitsfilter betätigbar sind.

Der erste Boden kann im Wesentlichen in der halben Höhe des Eimers angeordnet sein. Eine solche Anordnung ist vorteilhaft, weil dadurch einerseits eine gute Funktion des Eimers, wie zuvor beschrieben, gewährleistet ist. Andererseits ist ein ausreichend großer Einbauraum für zumindest eine Betätigungsvorrichtung vorhanden.

Der zweite Boden kann einen Bestandteil der Aufstandsfläche des Eimers bilden.

Ein weiterer Bestandteil der Aufstandsfläche kann durch die mit dem Eimer verbundene Betätigungsvorrichtung im Einbauraum gebildet sein.

Das im Eimer bewegte Wasservolumen kann 2 Liter bis 5 Liter betragen. Ein solches Wasservolumen hat sich als vorteilhaft bewährt, weil dadurch einerseits die zuvor beschriebenen Abläufe einwandfrei funktionieren und andererseits der befüllte Eimer auch von weniger kräftigen Benutzern problemlos zu handhaben ist.

Der Wasserstand in der Auswasch-/ Ausschleuderkammer kann während der bestimmungsgemäßen Verwendung des Eimers 0 bis 80 mm über dem ersten Boden betragen. Dieser durch Betätigung des Verdrängerkörpers veränderliche Wasserstand ist ausreichend groß, um auch stärker verunreinigte Reinigungsgeräte gründlich auswaschen zu können und außerdem klein genug, um mit möglichst wenig bewegtem Wasservolumen eine gute Handhabung des Eimers zu erreichen.

Der Wasserstand kann während der bestimmungsgemäßen Verwendung des Eimers bei nicht durch die erste Betätigungsvorrichtung betätigtem Verdrängerkörper 0 mm, bei durch die erste Betätigungsvorrichtung betätigtem Verdrängerkörper maximal 80 mm betragen.

In der Auswasch-/ Ausschleuderkammer kann eine Aufnahme für das Reinigungsgerät zum Auswaschen oder Ausschleudern des Reinigungsgeräts angeordnet sein. Eine solche Aufnahme kann zum Beispiel durch einen Dorn gebildet sein, auf den das Reinigungsgerät, das zum Beispiel als Wischmopp ausgebildet ist, aufgesetzt werden kann.

Die Erfindung betrifft außerdem, wie zuvor bereits ausgeführt, ein Reinigungssystem umfassend einen Eimer und ein Reinigungsgerät, wie zuvor beschrieben.

### Kurzbeschreibung der Zeichnung

Zwei Ausführungsbeispiele des erfindungsgemäßen Eimers und des Reinigungssystems, das einen solchen Eimer umfasst, werden nachfolgend anhand der Figuren 1 bis 7 näher beschrieben.

Diese Figuren zeigen jeweils in schematischer Darstellung:
- Figur 1: ein erstes Ausführungsbeispiel des erfindungsgemäßen Reinigungssystems, das den erfindungsgemäßen Eimer umfasst, in geschnittener Darstellung, wobei die kombinierte Auswasch-/ Ausschleuderkammer mit Wasser maximal befüllt ist,
- Figur 2: das Ausführungsbeispiel aus Figur 1 in einem anderen Betriebszustand. Die kombinierte Auswasch-/ Ausschleuderkammer ist im Wesentlichen trocken,
- Figur 3: das Ausführungsbeispiel aus den Figuren 1 und 2 in einer Draufsicht,
- Figur 4: die Wasserstands-Regulierungskammer und den Überströmkanal mit einer als Flüssigkeitsfilter ausgebildeten Klappe als Ausschnitt, wobei sich der Verdrängerkörper in einer Abwärtsbewegung befindet,
- Figur 5: den Ausschnitt aus Figur 4, wobei sich der Verdrängerkörper in einer Aufwärtsbewegung befindet,
- Figur 6: ein zweites Ausführungsbeispiel, ähnlich dem Ausführungsbeispiel aus Figur 1,
- Figur 7: das zweite Ausführungsbeispiel aus Figur 6 in einer Darstellung, ähnlich Figur 2.

### Ausführung der Erfindung

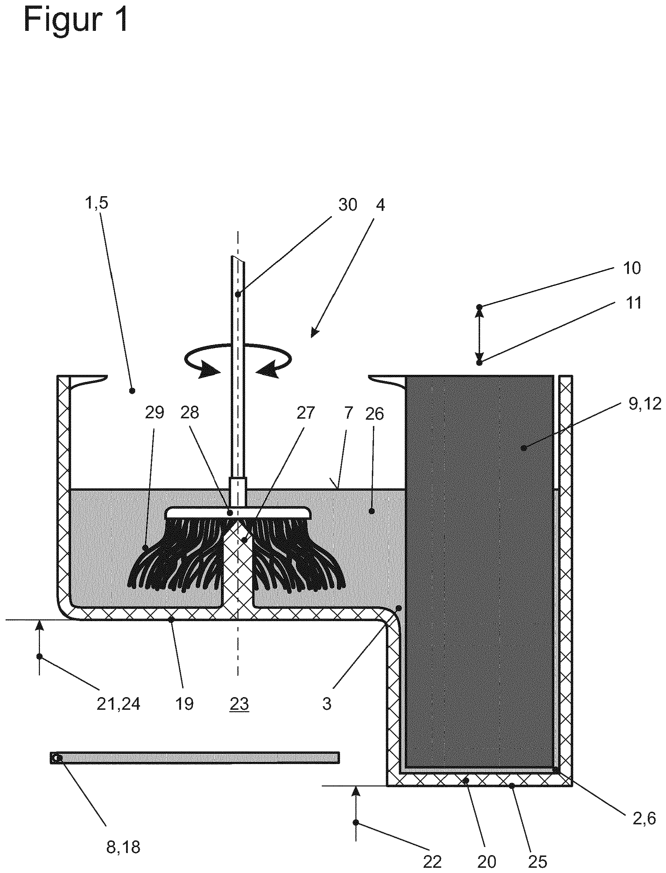

In den Figuren 1 bis 5 ist ein erstes Ausführungsbeispiel des erfindungsgemäßen Reinigungssystems und des erfindungsgemäßen Eimers gezeigt.

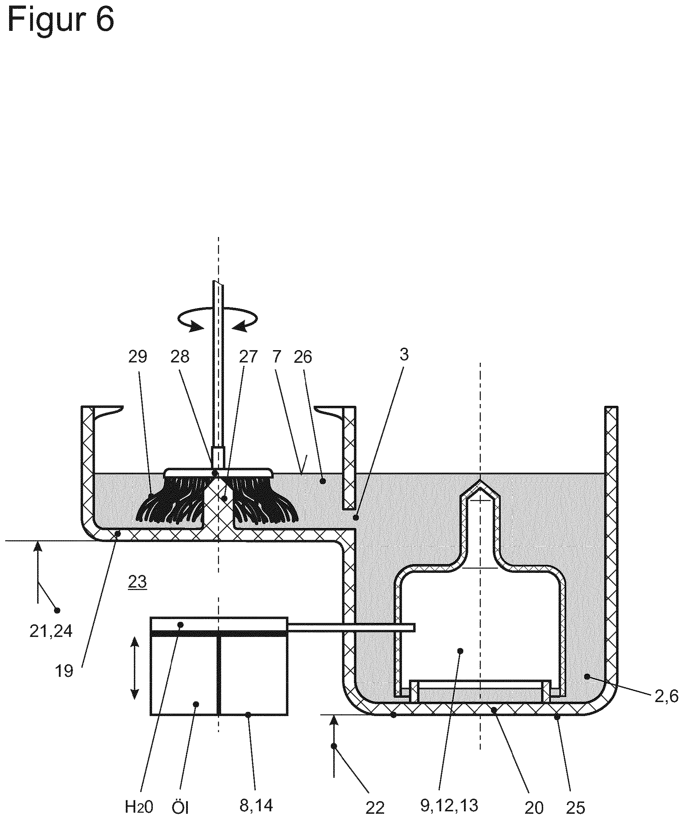

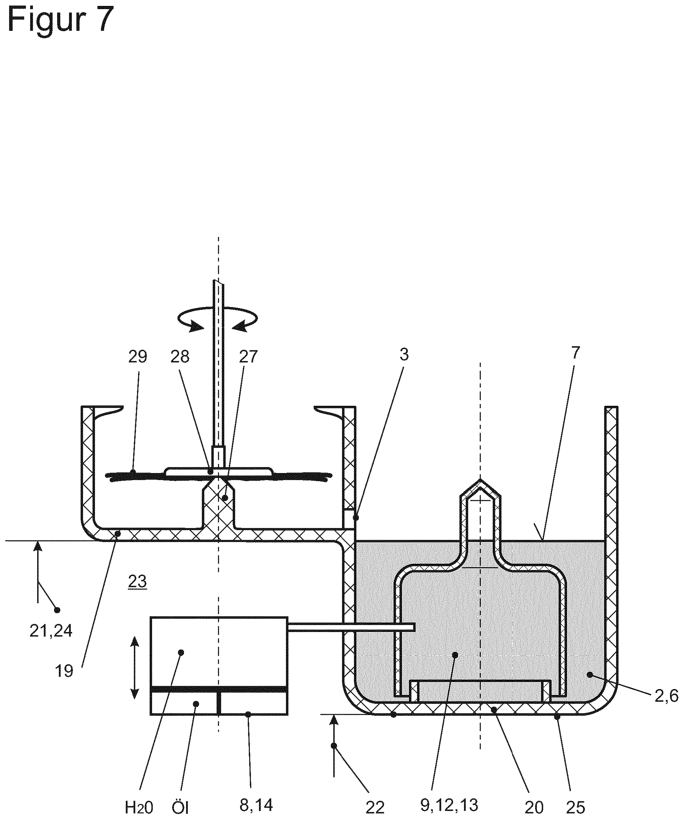

In den Figuren 6 und 7 ist ein zweites Ausführungsbeispiel des erfindungsgemäßen Reinigungssystems und des erfindungsgemäßen Eimers gezeigt.

Die beiden Ausführungsbeispiele unterscheiden sich im Wesentlichen durch die Ausgestaltung der Wasserstands-Regulierungskammer 6, des darin auf 10 und ab 11 beweglichen Verdrängerkörpers 9 und durch die erste Betätigungsvorrichtung 8.

In beiden Ausführungsbeispielen ist ein Reinigungssystem gezeigt, das den Eimer und ein Reinigungsgerät 4 umfasst. Das Reinigungsgerät 4 ist in den hier gezeigten Ausführungsbeispielen als Wischmopp ausgebildet, umfasst einen Moppkopf 28, an dem Fransen 29 aus einem textilen Material festgelegt sind, und der Moppkopf 28 ist mit einem Gerätestiel 30 verbunden.

Der zur Anwendung gelangende Eimer umfasst jeweils die beiden Kammern 1, 2, die durch den Überströmkanal 3 strömungsleitend miteinander verbunden sind. Die erste Kammer 1 ist als kombinierte Auswasch-/ Ausschleuderkammer 5 ausgebildet. In dieser ersten Kammer 1 kann das Reinigungsgerät 4, wie später noch erläutert werden wird, zunächst ausgewaschen und anschließend ausgeschleudert werden.

Die zweite Kammer 2 ist als Wasserstands-Regulierungskammer 6 zur Regulierung des Wasserstands 7 in der Auswasch-/ Ausschleuderkammer 5 ausgebildet. In der Wasserstands-Regulierungskammer 6 ist ein durch die erste Betätigungsvorrichtung 8 auf 10 und ab 11 bewegbarer Verdrängerkörper 9 angeordnet.

In den Figuren 1 bis 5 ist der Verdrängerkörper 9 als Hohlkörper 12 und im Wesentlichen glockenförmig ausgebildet.

Der Eimer ist stufenförmig ausgebildet, wobei die Böden 19, 20 der Auswasch-/ Ausschleuderkammer 5 und der Wasserstands-Regulierungskammer 6 stufenförmig versetzt zueinander angeordnet sind.

Durch den im Vergleich zum zweiten Boden 20 höher angeordneten ersten Boden 19 ist unter der Auswasch-/ Ausschleuderkammer 5 der Einbauraum 23 für zumindest die erste Betätigungsvorrichtung 8 gebildet, die im hier gezeigten Ausführungsbeispiel als Fußpedal ausgebildet ist.

Die obere Begrenzung des Einbauraums 23 wird durch den ersten Boden 19 gebildet, der im Wesentlichen in der halben Höhe 24 des Eimers angeordnet ist. Dadurch bleibt für den Benutzer genug Raum zur Betätigung der ersten Betätigungsvorrichtung 8.

Für eine möglichst einfache Handhabung sind im hier gezeigten Ausführungsbeispiel die erste Betätigungsvorrichtung 8 und die zweite Betätigungsvorrichtung 18 funktionstechnisch gekoppelt.

Die zweite Betätigungsvorrichtung 18 ist zur Betätigung des als Klappe 17 ausgebildeten Flüssigkeitsfilters 15 vorgesehen. Der Flüssigkeitsfilter 15 ist nur in Strömungsrichtung 16 von der Wasserstands-Regulierungskammer 6 zu der Auswasch-/ Ausschleuderkammer 5 durchströmbar, in Gegenrichtung also von der Auswasch-/ Ausschleuderkammer 5 zur Wasserstands-Regulierungskammer 6, wird der Flüssigkeitsfilter 15 demgegenüber ohne Funktion umströmt.

In Figur 1 ist ein erster Betriebszustand des Eimers dargestellt.

Mit dem Reinigungsgerät 4 wurde zuvor gereinigt, und das Reinigungsgerät 4 soll nun in der kombinierten Auswasch-/ Ausschleuderkammer 5 ausgewaschen werden.

Um ausreichend viel Wasser zum Auswaschen des Reinigungsgeräts 4 in der kombinierten Auswasch-/ Ausschleuderkammer 5 zur Verfügung zu haben, wurde die erste Betätigungsvorrichtung 8 vom Benutzer betätigt, und dadurch wurde der Verdrängerkörper 9 in einer Abwärtsbewegung 11 in die Wasserstands-Regulierungskammer 6 bewegt.

Das in der Wasserstands-Regulierungskammer 6 befindliche Wasser wurde vom Verdrängerkörper 9 weitgehend verdrängt und durch den Überströmkanal 3 in die kombinierte Auswasch-/ Ausschleuderkammer 5 bewegt.

Dabei wurde der Flüssigkeitsfilter 15, der in der Klappe 17 angeordnet ist, durchströmt. Verunreinigungen, die sich zuvor im Wasser in der Wasserstands-Regulierungskammer 6 befunden haben, wurden dadurch ausgefiltert.

Das nun in der Auswasch-/ Ausschleuderkammer 5 befindliche Wasser ist deshalb weitgehend frei von Verunreinigungen.

Das Reinigungsgerät 4 kann nun im gefilterten Wasser der Auswasch-/ Ausschleuderkammer 5 ausgewaschen werden.

Anschließend soll das Reinigungsgerät 4 in der kombinierten Auswasch-/ Ausschleuderkammer 5 ausgeschleudert werden, um dann wieder benutzt werden zu können.

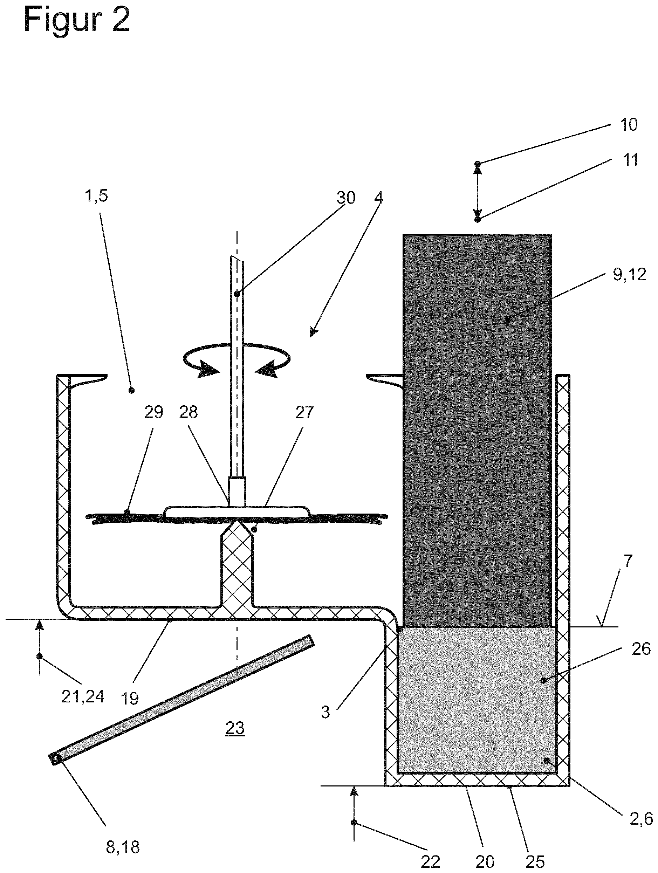

In Figur 2 ist gezeigt, dass sich die erste Betätigungsvorrichtung 8, bedingt durch den Auftrieb des hohlen Verdrängerkörpers 9 in der Wasserstands-Regulierungskammer 6, selbsttätig wieder in ihre Ausgangsposition bewegt hat. In dem Maße, wie der Verdrängerkörper 9 in der Wasserstands-Regulierungskammer 6 aufschwimmt, strömt das Wasser aus der kombinierten Auswasch-/ Ausschleuderkammer 5 durch den Überströmkanal 3 in die Wasserstands-Regulierungskammer 6 zurück. Dabei nimmt das Wasser alle aus dem Reinigungsgerät 4 ausgewaschenen Verunreinigungen mit. Das Wasser und die Verunreinigungen umströmen den Flüssigkeitsfilter 15, so dass sich anschließend das Wasser und die Verunreinigungen wieder in der Wasserstands-Regulierungskammer 6 befinden.

Die Auswasch-/ Ausschleuderkammer 5 ist nun weitgehend trocken, und das Reinigungsgerät 4 kann, aufgesetzt auf die Aufnahme 27, ausgeschleudert werden.

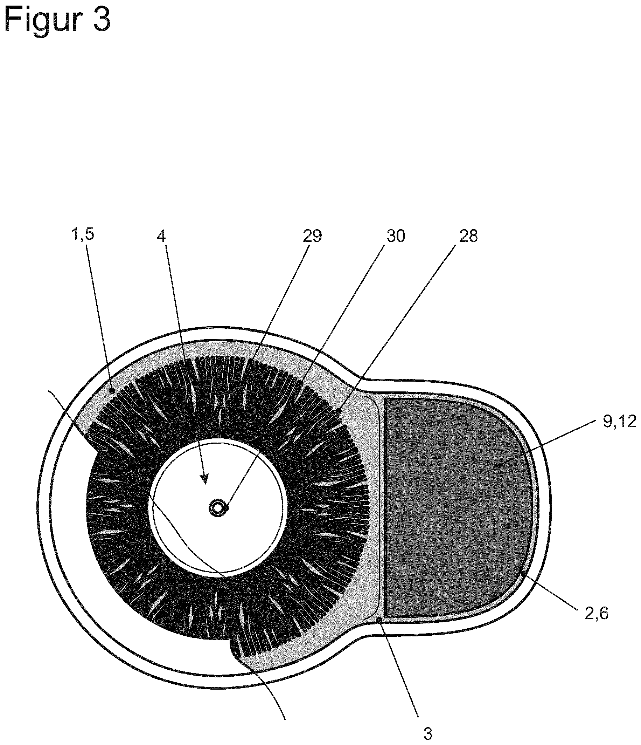

In Figur 3 ist eine Draufsicht auf das Reinigungssystem aus den Figuren 1 und 2 gezeigt. Es ist zu erkennen, dass die Auswasch-/ Ausschleuderkammer 5 und die Wasserstands-Regulierungskammer 6 nebeneinander liegend angeordnet sind.

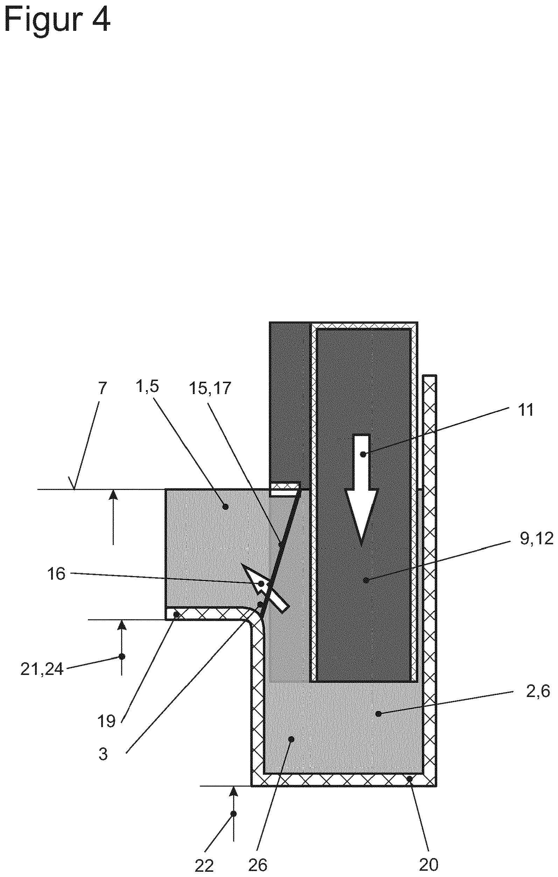

In Figur 4 ist ein Ausschnitt aus dem Reinigungssystem gemäß Figuren 1 und 2 rund um den Flüssigkeitsfilter 15 gezeigt.

Der Flüssigkeitsfilter 15 ist in einer schwenkbar im Überströmkanal 3 angeordneten Klappe 17 angeordnet, wobei die Klappe 17 durch den Flüssigkeitsfilter 15 gebildet ist.

In Figur 4 ist gezeigt, dass der Flüssigkeitsfilter 15 nur in Strömungsrichtung 16 von der Wasserstands-Regulierungskammer 6 zu der Auswasch-/ Ausschleuderkammer 5 durchströmbar ist.

Dazu verschließt der als Klappe 17 ausgebildete Flüssigkeitsfilter 15 den Überströmkanal 3. Bei Abwärtsbewegung 11 des Verdrängerkörpers 9 kann das in der Wasserstands-Regulierungskammer 6 befindliche Wasser nur durch den Flüssigkeitsfilter 15 hindurch in die benachbarte Auswasch-/ Ausschleuderkammer 5 gelangen.

Entweder ist die Klappe selbsttätig durch die Strömungsverhältnisse im Überströmkanal 3 bewegbar oder durch die zweite Betätigungsvorrichtung 18, die im hier gezeigten Ausführungsbeispiel mit der ersten Betätigungsvorrichtung 8 funktionstechnisch gekoppelt und deshalb zwangsweise bewegbar ist.

Die in der Wasserstands-Regulierungskammer 6 befindliche und verunreinigte Flüssigkeit wird bei Durchströmung des Flüssigkeitsfilters 15 gefiltert. Dadurch gelangt weitgehend sauberes Wasser in die Auswasch-/ Ausschleuderkammer 5.

Der Flüssigkeitsfilter kann Hohlfasern umfassen, die eine besonders gute Reinigungs-/ Filterwirkung haben.

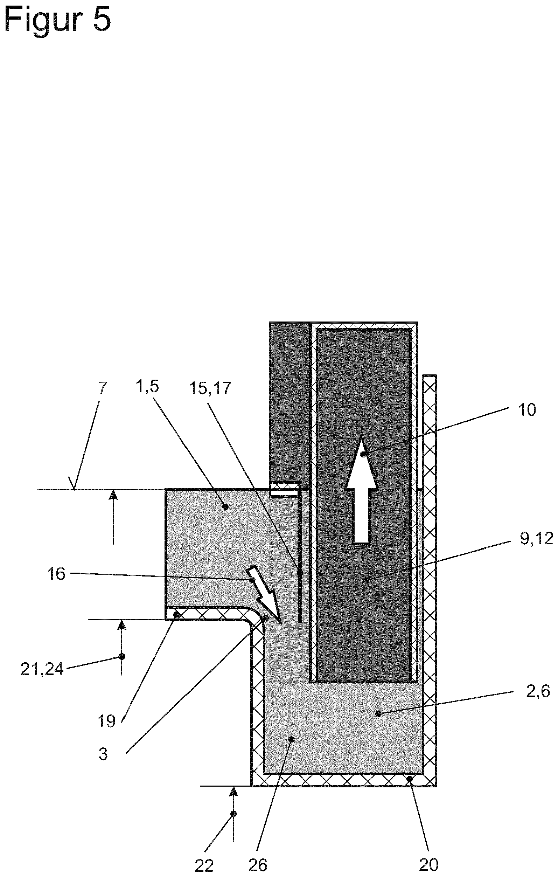

In Figur 5 ist der Betriebszustand gezeigt, bei dem sich der Verdrängerkörper 9 in der Wasserstands-Regulierungskammer 6 aufwärts 10 bewegt. Währenddessen öffnet die als Flüssigkeitsfilter 15 ausgebildete Klappe 17 den Überströmkanal 3, und das durch das Auswaschen des Reinigungsgeräts 4 verunreinigte Wasser aus der Auswasch-/ Ausschleuderkammer 5 strömt an der geöffneten Klappe 17 ungehindert vorbei in die Wasserstands-Regulierungskammer 6.

Am Ende der Abwärtsbewegung 11 des Verdrängerkörpers 9 aus Figur 4 liegt der in Figur 1 dargestellte Betriebszustand vor.

Am Ende der Aufwärtsbewegung 10 des Verdrängerkörpers 9 aus Figur 5 liegt der in Figur 2 dargestellte Betriebszustand vor.

In den Figuren 6 und 7 ist ein weiteres Ausführungsbeispiel eines Reinigungssystems gezeigt, das sich von dem zuvor beschriebenen Reinigungssystem im Wesentlichen durch die Ausgestaltung des Verdrängerkörpers 9 und dessen Betätigungsvorrichtung 8 unterscheidet.

Der Verdrängerkörper 9 hat ein veränderliches Verdrängervolumen 13, das strömungsleitend mit der Wasserstands-Regulierungskammer 6 verbunden und durch Betätigung einer blasebalgähnlichen Evakuierungsvorrichtung 14 volumenveränderlich ist.

Die erste Betätigungsvorrichtung 8 ist im hier gezeigten Ausführungsbeispiel als Evakuierungsvorrichtung 14 ausgebildet und ebenfalls, wie zuvor beschrieben, im Einbauraum 23 des Eimers angeordnet.

In Figur 6 ist ein Betriebszustand des Reinigungssystems gezeigt, ähnlich dem Betriebszustand aus Figur 1.

Durch Betätigung der Evakuierungsvorrichtung 14 wird die zuvor im Verdrängerkörper 9 angeordnete Flüssigkeit aus diesem verdrängt. Der Wasserstand 7 in der Wasserstands-Regulierungskammer 6 und der Auswasch-/ Ausschleuderkammer 5 ist durch die flüssigkeitsleitende Verbindung des Überströmkanals 3 im Wesentlichen übereinstimmend hoch. Das Reinigungsgerät 4 kann ausgewaschen werden.

In Figur 7 ist das Reinigungssystem zum Ausschleudern des Reinigungsgeräts 4 vorbereitet.

Die zuvor aus dem Verdrängerkörper 9 verdrängte Flüssigkeit ist nun wieder in diesem zurück und die Auswasch-/ Ausschleuderkammer 5 dadurch im Wesentlichen trockengelegt.

Die Ausgestaltung und Funktion des Flüssigkeitsfilters 15 und die stufenförmige Gestalt des Eimers unterscheiden sich von dem in den Figuren 1 bis 5 dargestellten Reinigungssystem nicht.

In beiden Ausführungsbeispielen gemäß Figuren 1 bis 7 bildet der zweite Boden 20 einen Bestandteil der Aufstandsfläche 25 des Eimers, das im Eimer bewegte Wasservolumen beträgt etwa 4 bis 5 Liter und der Wasserstand 7 in der Auswasch-/ Ausschleuderkammer 5, während der bestimmungsgemäßen Verwendung des Eimers, beträgt 0 bis 80 mm über dem ersten Boden 19.

Die Handhabung des erfindungsgemäßen Reinigungssystems und des erfindungsgemäßen Eimers ist für den Benutzer besonders einfach, weil in ein und derselben ersten Kammer 1 das Reinigungsgerät 4 entweder ausgewaschen oder ausgeschleudert werden kann. Dafür wird der Wasserstand 7 durch Betätigung des Verdrängerkörpers 9 entsprechend angepasst.

## Patentansprüche

1. Eimer, umfassend zumindest zwei Kammern (1, 2), die durch zumindest einen Überströmkanal (3) strömungsleitend miteinander verbunden sind, wobei eine der Kammern (1) als für ein Reinigungsgerät (4) kombinierte Auswasch-/Ausschleuderkammer (5) und eine der Kammern (2) als Wasserstands-Regulierungskammer (6) zur Regulierung des Wasserstands (7) in der Auswasch-/Ausschleuderkammer (5) ausgebildet ist, **dadurch gekennzeichnet, dass** in der Wasserstands-Regulierungskammer (6) ein durch eine erste Betätigungsvorrichtung (8) bewegbarer Verdrängerkörper (9) angeordnet ist.

2. Eimer nach Anspruch 1, **dadurch gekennzeichnet, dass** die Auswasch-ZAusschleuderkammer (5) und die Wasserstands-Regulierungskammer (6), in einer Draufsicht auf den Eimer betrachtet, im Wesentlichen nebeneinanderliegend angeordnet sind.

3. Eimer nach einem der vorangegangenen Ansprüche, **dadurch gekennzeichnet, dass** der Verdrängerkörper (9) durch die erste Betätigungsvorrichtung (8) auf (10) und ab (11) bewegbar ist.

4. Eimer nach einem der vorangegangenen Ansprüche, **dadurch gekennzeichnet, dass** der Verdrängerkörper (9) als Hohlkörper (12) ausgebildet ist.

5. Eimer nach einem der vorangegangenen Ansprüche, **dadurch gekennzeichnet, dass** der Verdrängerkörper (9) glockenförmig ausgebildet ist.

6. Eimer nach einem der vorangegangenen Ansprüche, **dadurch gekennzeichnet, dass** der Verdrängerkörper (9) ein veränderliches Verdrängervolumen (13) aufweist.

7. Eimer nach einem der vorangegangenen Ansprüche, **dadurch gekennzeichnet, dass** das Verdrängervolumen (13) strömungsleitend mit der Wasserstands-Regulierungskammer (6) verbunden und durch Betätigung einer Evakuierungsvorrichtung (14) volumenveränderlich ist.

8. Eimer nach einem der vorangegangenen Ansprüche, **dadurch gekennzeichnet, dass** im Überströmkanal (3) ein Flüssigkeitsfilter (15) angeordnet ist.

9. Eimer nach einem der vorangegangenen Ansprüche, **dadurch gekennzeichnet, dass** der Flüssigkeitsfilter (15) in nur einer Strömungsrichtung (16) von der Wasserstands-Regulierungskammer (6) zu der Auswasch-/Ausschleuderkammer (5) durchströmbar ist.

10. Eimer nach einem der vorangegangenen Ansprüche, **dadurch gekennzeichnet, dass** der Flüssigkeitsfilter (15) nach Art eines Rückschlagventils ausgebildet ist, derart, dass der Flüssigkeitsfilter (15) entgegengesetzt zur Strömungsrichtung (16), von der Auswasch-/Ausschleuderkammer (5) zur Wasserstands-Regulierungskammer (6), umströmbar ist.

11. Eimer nach einem der voranstehenden Ansprüche, **dadurch gekennzeichnet, dass** der Flüssigkeitsfilter (15) in einer im Überströmkanal (3) schwenkbar angeordneten Klappe (17) angeordnet ist.

12. Eimer nach einem der voranstehenden Ansprüche, **dadurch gekennzeichnet, dass** die Klappe (17) durch die Strömungsverhältnisse im Überströmkanal (3) selbsttätig bewegbar ist.

13. Eimer nach einem der voranstehenden Ansprüche, **dadurch gekennzeichnet, dass** die Klappe (17) durch eine zweite Betätigungsvorrichtung (18) betätigbar ist.

14. Eimer nach einem der voranstehenden Ansprüche, **dadurch gekennzeichnet, dass** die erste (8) und die zweite Betätigungsvorrichtung (18) funktionstechnisch gekoppelt und gleichzeitig betätigbar sind.

15. Eimer nach einem der vorangegangenen Ansprüche, **dadurch gekennzeichnet, dass** die Auswasch-/Ausschleuderkammer (5) einen ersten Boden (19) und die Wasserstands-Regulierungskammer (6) einen zweiten Boden (20) umfasst, dass die Böden (19, 20) im Eimer in unterschiedlichen Höhen (21, 22) angeordnet sind und dass der erste Boden (19) oberhalb des zweiten Bodens (20) angeordnet ist.

16. Eimer nach einem der vorangegangenen Ansprüche, **dadurch gekennzeichnet, dass** die Böden (19, 20), im Schnitt des Eimers betrachtet, stufenförmig versetzt zueinander angeordnet sind.

17. Eimer nach einem der vorangegangenen Ansprüche, **dadurch gekennzeichnet, dass** unterhalb des ersten Bodens (19) ein Einbauraum (23) angeordnet ist und dass im Einbauraum (23) zumindest die erste Betätigungsvorrichtung (8) angeordnet ist.

18. Eimer nach einem der voranstehenden Ansprüche, **dadurch gekennzeichnet, dass** der erste Boden (19) im Wesentlichen in der halben Höhe (24) des Eimers angeordnet ist.

19. Eimer nach einem der voranstehenden Ansprüche, **dadurch gekennzeichnet, dass** der zweite Boden (20) einen Bestandteil der Aufstandsfläche (25) des Eimers bildet.

20. Eimer nach einem der voranstehenden Ansprüche, **dadurch gekennzeichnet, dass** das im Eimer bewegte Wasservolumen (26) 2 l bis 5 l beträgt.

21. Eimer nach einem der voranstehenden Ansprüche, **dadurch gekennzeichnet, dass** der Wasserstand (7) in der Auswasch-/Ausschleuderkammer (5) während der bestimmungsgemäßen Verwendung des Eimers 0 bis 80 mm über dem ersten Boden (19) beträgt.

22. Eimer nach einem der voranstehenden Ansprüche, **dadurch gekennzeichnet, dass** der Wasserstand (7) während der bestimmungsgemäßen Verwendung des Eimers bei nicht durch die erste Betätigungsvorrichtung (8) betätigtem Verdrängerkörper (9) 0 mm, bei durch die erste Betätigungsvorrichtung (8) betätigtem Verdrängerkörper (9) maximal 80 mm beträgt.

23. Eimer nach einem der voranstehenden Ansprüche, **dadurch gekennzeichnet, dass** in der Auswasch-/Ausschleuderkammer (5) eine Aufnahme (27) für das Reinigungsgerät (4) zum Auswaschen oder Ausschleudern des Reinigungsgeräts (4) angeordnet ist.

24. Reinigungssystem, umfassend einen Eimer nach einem der voranstehenden Ansprüche und ein Reinigungsgerät (4).

## Claims

1. Bucket comprising at least two chambers (1, 2) which are connected to one another in a flow-conducting manner by at least one flow-transfer channel (3), wherein one of the chambers (1) is designed as a rinsing-out/spinning-out chamber (5) combined for a cleaning implement (4) and one of the chambers (2) is designed as a water-level regulation chamber (6) for regulating the water level (7) in the rinsing-out/spinning-out chamber (5), **characterized in that** a displacement body (9) able to be moved by a first actuating device (8) is arranged in the water-level regulation chamber (6).

2. Bucket according to Claim 1, **characterized in that** the rinsing-out/spinning-out chamber (5) and the water-level regulation chamber (6), as seen in a plan view of the bucket, are arranged situated substantially next to one another.

3. Bucket according to one of the preceding claims, **characterized in that** the displacement body (9) is able to be moved up (10) and down (11) by the first actuating device (8).

4. Bucket according to one of the preceding claims, **characterized in that** the displacement body (9) is in the form of a hollow body (12).

5. Bucket according to one of the preceding claims, **characterized in that** the displacement body (9) is of bell-shaped form.

6. Bucket according to one of the preceding claims, **characterized in that** the displacement body (9) has a variable displacement volume (13).

7. Bucket according to one of the preceding claims, **characterized in that** the displacement volume (13) is connected in a flow-conducting manner to the water-level regulation chamber (6), and its volume is able to be varied by actuation of an evacuation device (14).

8. Bucket according to one of the preceding claims, **characterized in that** a liquid filter (15) is arranged in the flow-transfer channel (3).

9. Bucket according to one of the preceding claims, **characterized in that** the liquid filter (15) is able to be flowed through in only one flow direction (16), from the water-level regulation chamber (6) to the rinsing-out/spinning-out chamber (5).

10. Bucket according to one of the preceding claims, **characterized in that** the liquid filter (15) is designed in the manner of a check valve, in such a way that the liquid filter (15) is able to be flowed around in the direction opposite to the flow direction (16), from the rinsing-out/spinning-out chamber (5) to the water-level regulation chamber (6) .

11. Bucket according to one of the preceding claims, **characterized in that** the liquid filter (15) is arranged in a flap (17) which is pivotably arranged in the flow-transfer channel (3).

12. Bucket according to one of the preceding claims, **characterized in that** the flap (17) is able to be moved automatically by way of the flow conditions in the flow-transfer channel (3).

13. Bucket according to one of the preceding claims, **characterized in that** the flap (17) is able to be actuated by a second actuating device (18).

14. Bucket according to one of the preceding claims, **characterized in that** the first actuating device (8) and the second actuating device (18) are functionally coupled and simultaneously actuatable.

15. Bucket according to one of the preceding claims, **characterized in that** the rinsing-out/spinning-out chamber (5) comprises a first base (19) and the water-level regulation chamber (6) comprises a second base (20), **in that** the bases (19, 20) are arranged at different heights (21, 22) in the bucket, and **in that** the first base (19) is arranged above the second base (20).

16. Bucket according to one of the preceding claims, **characterized in that** the bases (19, 20), as seen in a section of the bucket, are arranged offset from one another in a stepped manner.

17. Bucket according to one of the preceding claims, **characterized in that** an installation space (23) is arranged below the first base (19), and **in that** at least the first actuating device (8) is arranged in the installation space (23).

18. Bucket according to one of the preceding claims, **characterized in that** the first base (19) is arranged at substantially the mid-height (24) of the bucket.

19. Bucket according to one of the preceding claims, **characterized in that** the second base (20) forms a constituent part of the standing surface (25) of the bucket.

20. Bucket according to one of the preceding claims, **characterized in that** the volume of water (26) moved in the bucket amounts to 2 l to 5 l.

21. Bucket according to one of the preceding claims, **characterized in that**, during use of the bucket as intended, the water level (7) in the rinsing-out/spinning-out chamber (5) is 0 to 80 mm above the first base (19).

22. Bucket according to one of the preceding claims, **characterized in that**, during use of the bucket as intended, the water level (7) is 0 mm with the displacement body (9) not actuated by the first actuating device (8) and is at most 80 mm with the displacement body (9) actuated by the first actuating device (8).

23. Bucket according to one of the preceding claims, **characterized in that** a mount (27) for the cleaning implement (4) is arranged in the rinsing-out/spinning-out chamber (5) for rinsing-out or spinning-out of the cleaning implement (4).

24. Cleaning system comprising a bucket according to one of the preceding claims and a cleaning implement (4) .

## Revendications

1. Seau, comprenant au moins deux chambres (1, 2) qui sont reliées l'une à l'autre de manière fluidique par au moins un canal de trop-plein (3), l'une des chambres (1) étant réalisée sous forme de chambre de lavage/d'essorage(5) combinée pour un appareil de nettoyage (4) et l'une des chambres (2) étant réalisée sous forme de chambre de régulation de niveau d'eau (6) servant à la régulation du niveau d'eau (7) dans la chambre de lavage/d'essorage (5), **caractérisé en ce qu'**un corps de refoulement (9) pouvant être déplacé par un premier dispositif d'actionnement (8) est disposé dans la chambre de régulation de niveau d'eau (6).

2. Seau selon la revendication 1, **caractérisé en ce que** la chambre de lavage/d'essorage (5) et la chambre de régulation de niveau d'eau (6) sont, considérées dans une vue de dessus du seau, disposées sensiblement l'une à côté de l'autre.

3. Seau selon l'une quelconque des revendications précédentes, **caractérisé en ce que** le corps de refoulement (9) peut être déplacé vers le haut (10) et vers le bas (11) par le premier dispositif d'actionnement (8) .

4. Seau selon l'une quelconque des revendications précédentes, **caractérisé en ce que** le corps de refoulement (9) est réalisé sous forme de corps creux (12) .

5. Seau selon l'une quelconque des revendications précédentes, **caractérisé en ce que** le corps de refoulement (9) est réalisé en forme de cloche.

6. Seau selon l'une quelconque des revendications précédentes, **caractérisé en ce que** le corps de refoulement (9) présente un volume de refoulement (13) modifiable.

7. Seau selon l'une quelconque des revendications précédentes, **caractérisé en ce que** le volume de refoulement (13) est relié de manière fluidique à la chambre de régulation de niveau d'eau (6) et son volume peut être modifié par actionnement d'un dispositif d'évacuation (14).

8. Seau selon l'une quelconque des revendications précédentes, **caractérisé en ce qu'**un filtre à liquide (15) est disposé dans le canal de trop-plein (3).

9. Seau selon l'une quelconque des revendications précédentes, **caractérisé en ce que** le filtre à liquide (15) ne peut être traversé que dans un sens d'écoulement (16) de la chambre de régulation de niveau d'eau (6) à la chambre de lavage/d'essorage (5).

10. Seau selon l'une quelconque des revendications précédentes, **caractérisé en ce que** le filtre à liquide (15) est réalisé à la manière d'une soupape anti-retour, de telle sorte que le filtre à liquide (15) peut être contourné en sens opposé au sens d'écoulement (16), de la chambre de lavage/d'essorage (5) à la chambre de régulation de niveau d'eau (6).

11. Seau selon l'une quelconque des revendications précédentes, **caractérisé en ce que** le filtre à liquide (15) est disposé dans un volet (17) disposé pivotant dans le canal de trop-plein (3).

12. Seau selon l'une quelconque des revendications précédentes, **caractérisé en ce que** le volet (17) peut être déplacé automatiquement par le biais des conditions d'écoulement dans le canal de trop-plein (3).

13. Seau selon l'une quelconque des revendications précédentes, **caractérisé en ce que** le volet (17) peut être actionné par un deuxième dispositif d'actionnement (18) .

14. Seau selon l'une quelconque des revendications précédentes, **caractérisé en ce que** le premier (8) et le deuxième dispositif d'actionnement (18) sont couplés fonctionnellement et peuvent être actionnés simultanément.

15. Seau selon l'une quelconque des revendications précédentes, **caractérisé en ce que** la chambre de lavage/d'essorage (5) comprend un premier fond (19) et la chambre de régulation de niveau d'eau (6) comprend un deuxième fond (20), **en ce que** les fonds (19, 20) sont disposés à différentes hauteurs (21, 22) dans le seau et **en ce que** le premier fond (19) est disposé au-dessus du deuxième fond (20).

16. Seau selon l'une quelconque des revendications précédentes, **caractérisé en ce que** les fonds (19, 20) sont disposés de manière décalée l'un par rapport à l'autre de façon étagée, considérés en coupe du seau.

17. Seau selon l'une quelconque des revendications précédentes, **caractérisé en ce qu'**un espace d'installation (23) est disposé en dessous du premier fond (19) et **en ce qu'**au moins le premier dispositif d'actionnement (8) est disposé dans l'espace installation (23) .

18. Seau selon l'une quelconque des revendications précédentes, **caractérisé en ce que** le premier fond (19) est disposé sensiblement à mi-hauteur (24) du seau.

19. Seau selon l'une quelconque des revendications précédentes, **caractérisé en ce que** le deuxième fond (20) forme une partie constitutive de la surface d'appui (25) du seau.

20. Seau selon l'une quelconque des revendications précédentes, **caractérisé en ce que** le volume d'eau (26) déplacé dans le seau vaut de 2 1 à 5 l.

21. Seau selon l'une quelconque des revendications précédentes, **caractérisé en ce que** le niveau d'eau (7) dans la chambre de lavage/d'essorage (5) pendant l'utilisation correcte du seau est à 0 à 80 mm au-dessus du premier fond (19).

22. Seau selon l'une quelconque des revendications précédentes, **caractérisé en ce que** le niveau d'eau (7) pendant l'utilisation correcte du seau, lorsque le corps de refoulement (9) n'est pas actionné par le premier dispositif d'actionnement (8), est à 0 mm, et lorsque le corps de refoulement (9) est actionné par le premier dispositif d'actionnement (8), est au maximum à 80 mm.

23. Seau selon l'une quelconque des revendications précédentes, **caractérisé en ce qu'**un logement (27) pour l'appareil de nettoyage (4) est disposé dans la chambre de lavage/d'essorage (5) pour le lavage ou l'essorage de l'appareil de nettoyage (4).

24. Système de nettoyage, comprenant un seau selon l'une des revendications précédentes et un appareil de nettoyage (4).
